# FASCICULE DE BREVET EUROPEEN

(11) **EP 3 602 769 B1**
(45) Date de publication et mention de la délivrance du brevet: **12.10.2022**
(21) Numéro de dépôt: 18715200.4
(22) Date de dépôt: 16.03.2018
(51) Int. Cl.: H02M 7/23

(54) **PROCÉDÉ DE COMMANDE D'UN CONVERTISSEUR AC/DC MULTINIVEAUX**
VERFAHREN ZUR STEUERUNG EINES MEHRSTUFIGEN AC/DC-WANDLERS
METHOD FOR CONTROLLING A MULTILEVEL AC/DC CONVERTER

(30) Priorité: 23.03.2017 FR 1752399
(43) Date de publication de la demande: 05.02.2020
(73) Titulaire: Supergrid Institute, 69100 Villeurbanne (FR)
(72) Inventeur: CHEDOT, Laurent, 69372 Lyon Cedex 08 (FR)
(74) Mandataire: Opilex
(86) Numéro de dépôt international: PCT/FR2018/050638
(87) Numéro de publication internationale: WO 2018/172671

(56) Documents cités:
- EP-A1- 2 797 217
- US-A- 5 027 264
- US-A1- 2016 072 398

## Description

### Domaine technique de l'invention

La présente invention se rapporte à un procédé de commande d'un convertisseur de type AC/DC multiniveaux. L'invention concerne également un système de commande d'un tel convertisseur AC/DC multiniveaux.

### Etat de la technique

Dans le domaine de la moyenne tension multiniveaux, il existe de nombreuses solutions de conversion de type AC/DC connues. L'une d'elles est formée de l'architecture suivante :
- n cellules de puissance Ci, avec i allant de 1 à n et n supérieur ou égal à 2 ;
- Chaque cellule de puissance comporte un convertisseur d'entrée de type AC/DC à au moins deux niveaux de tension et un convertisseur DC/DC isolé connecté audit convertisseur d'entrée ;
- Chaque convertisseur d'entrée d'une cellule Ci est connecté en série avec le convertisseur d'entrée de la cellule Ci+1 pour former un étage d'entrée destiné à être connecté à une source de tension alternative fournissant un courant d'entrée et commandé pour convertir une tension alternative en n tensions continues intermédiaires réparties dans chaque cellule de puissance ;
- Chaque convertisseur DC/DC de la cellule Ci est connecté en parallèle du convertisseur DC/DC de la cellule Ci+1 pour former un étage de sortie destiné à fournir une tension de sortie continue à une charge électrique ;

Dans chaque cellule de puissance, le convertisseur DC/DC est par exemple un convertisseur dit à double-pont, dénommé également "Dual Active Bridge". Il est bien connu et fait l'objet d'un intérêt particulier dans certains domaines, par exemple pour les réseaux électriques, dans la conversion des tensions fournies par des sources d'énergie photovoltaïque ou pour l'automobile, dans le chargement des batteries des véhicules électriques. Le convertisseur DC/DC à double pont est notamment étudié de près car il permet de mettre en œuvre des techniques de commutation douce ("soft switching").

Il existe un certain nombre de documents qui décrivent l'emploi de convertisseur DC/DC à double pont pour différentes applications et différents mécanismes de commande adaptés pour ces applications. On citera par exemple les documents référencés WO2013/164249A1**,** US2015/021998A1**,** US2008/212340A1**,** US8587975B2**.**

Le convertisseur DC/DC à double pont, comporte ainsi, en règle générale :
- Un transformateur comprenant un enroulement primaire et un enroulement secondaire ;
- Un premier pont de commutation de type DC/AC connecté à l'enroulement primaire du transformateur ;
- Un deuxième pont de commutation de type AC/DC, monté symétriquement par rapport au premier pont de commutation et connecté à l'enroulement secondaire du transformateur ;
- De manière optionnelle, un circuit résonant connecté en série sur le lien AC, du côté de l'enroulement primaire.
Ces deux ponts de commutation sont par exemple bidirectionnels.

Le document US2016/072398 décrit pour sa part une solution de convertisseur de puissance à plusieurs cellules connectées en série. L'architecture décrite est notamment de type entrée série et sortie parallèle.

Le document EP2797217A1 décrit une architecture de commande entre des modules de commande de deux blocs de puissance.

Le document US5027264A décrit pour sa part un convertisseur DC/DC isolé avec un convertisseur d'entrée et un convertisseur de sortie.

En général, pour différentes raisons précisées ci-dessous, dans chaque cellule de puissance, le convertisseur DC/DC à double pont est employé en mode "simple pont" ("Single Active Bridge"), c'est-à-dire qu'un seul des deux ponts de commutation est actif, l'autre étant commandé pour fonctionner comme un simple pont de diode. Les raisons liées à ce mode de fonctionnement sont les suivantes :
- Contrôle simple, sans boucle de régulation ;
- Electronique de commande simplifiée, un seul pont de commutation étant actif à chaque fois ;
- Rendement élevé car un fonctionnement en pont de diodes est plus efficace que de commander le pont de commutation.

Cependant, il existe également un certain nombre d'inconvénients à faire fonctionner le convertisseur DC/DC des cellules de puissance en mode "simple pont" uniquement. Ces inconvénients sont les suivants :
- Les tensions intermédiaires générées dans chaque cellule de puissance sont subies en fonction du point de fonctionnement (valeur et sens de la puissance), c'est-à-dire qu'elles augmentent lorsque le moteur est en traction (flux de puissance du réseau AC vers la charge DC) et diminuent lorsque le moteur est en freinage (flux de puissance de la charge DC vers le réseau AC).
- Les pertes dans l'étage d'entrée ne sont pas optimisées ;
- La transition entre un transfert de puissance positive et un transfert de puissance négative (la désactivation d'un pont de commutation pour le passer en pont de diodes et l'activation de l'autre pont de commutation en mode actif) n'est pas aisée car elle doit être réalisée à l'instant où la puissance s'annule, nécessitant une surveillance constante et des réglages temporels précis.

Il en ressort qu'une telle solution de conversion AC/DC n'est pas employée dans sa pleine mesure et qu'elle présente certains inconvénients dans son mode de fonctionnement actuel. Le but de l'invention est donc de proposer un procédé de commande d'un tel convertisseur AC/DC multiniveaux qui permette de l'employer dans sa pleine mesure, tout en évitant les inconvénients de l'état de la technique.

### Exposé de l'invention

Ce but est atteint par un procédé de commande d'un convertisseur AC/DC multiniveaux qui comporte n cellules de puissance Ci, avec i allant de 1 à n et n supérieur ou égal à 2, dans lequel :
- Chaque cellule de puissance comporte un convertisseur d'entrée de type AC/DC à au moins deux niveaux de tension et un convertisseur DC/DC isolé connecté audit convertisseur d'entrée,
- Chaque convertisseur d'entrée d'une cellule Ci étant connecté en série avec le convertisseur d'entrée de la cellule Ci+1 pour former un étage d'entrée destiné à être connecté à une source de tension alternative fournissant un courant d'entrée et commandé pour convertir une tension alternative en n tensions continues intermédiaires réparties dans chaque cellule de puissance,
- Le convertisseur DC/DC de chaque cellule Ci étant connecté en parallèle du convertisseur DC/DC de la cellule Ci+1 pour former un étage de sortie destiné à fournir une tension de sortie continue à une charge électrique,
- Et dans lequel :
- L'étage d'entrée est commandé pour réguler ladite tension de sortie à une valeur de référence en contrôlant ledit courant d'entrée,
- Chaque convertisseur DC/DC est commandé dans un premier mode de fonctionnement en boucle fermée de manière à réguler la tension intermédiaire de sa cellule de puissance ou dans un deuxième mode de fonctionnement en boucle ouverte sans régulation.

Selon un aspect particulier de l'invention, le deuxième mode de fonctionnement est utilisé en régime établi, si le rendement dans ce mode est le plus élevé.

Selon une particularité, le convertisseur DC/DC de chaque cellule de puissance Ci présente une topologie à double pont, comprenant deux ponts de commutation isolés entre eux par un transformateur, le premier mode de fonctionnement correspondant à un mode double pont dans lequel les deux ponts de commutation sont actifs en régulant ladite tension intermédiaire de la cellule et le deuxième mode de fonctionnement correspondant à un mode simple pont dans lequel l'un des pont de commutation est commandé en pont de diodes et l'autre pont de commutation est actif.

Selon une autre particularité, ladite tension de sortie est régulée par un bloc de régulation de tension recevant en entrée une valeur mesurée de la tension de sortie et ladite valeur de référence, le contrôle du courant d'entrée étant réalisé par un bloc de régulation de courant à partir d'une valeur mesurée du courant d'entrée et d'une valeur de référence.

Selon une autre particularité, la tension intermédiaire de chaque cellule de puissance est régulée dans un bloc de régulation recevant en entrée une valeur de référence de la tension intermédiaire déterminée à partir d'une valeur mesurée de la tension de sortie et une valeur mesurée de la tension intermédiaire.

L'invention concerne également un système de commande d'un convertisseur AC/DC multiniveaux qui comporte n cellules de puissance Ci, avec i allant de 1 à n et n supérieur ou égal à 2, dans lequel :
- Chaque cellule de puissance comporte un convertisseur d'entrée de type AC/DC à au moins deux niveaux de tension et un convertisseur DC/DC isolé connecté audit convertisseur d'entrée,
- Chaque convertisseur d'entrée d'une cellule Ci étant connecté en série avec le convertisseur d'entrée de la cellule Ci+1 pour former un étage d'entrée (IN) destiné à être connecté à une source de tension alternative fournissant un courant d'entrée et commandé pour convertir une tension alternative en n tensions continues intermédiaires réparties dans chaque cellule de puissance,

- Le convertisseur DC/DC de chaque cellule Ci étant connecté en parallèle du convertisseur DC/DC de la cellule Ci+1 pour former un étage de sortie destiné à fournir une tension de sortie continue à une charge électrique,
- Ledit système comportant également :
- Un module de commande de l'étage d'entrée apte à réguler ladite tension de sortie à une valeur de référence en contrôlant ledit courant d'entrée,
- Un module de commande apte à commander chaque convertisseur DC/DC dans un premier mode de fonctionnement en boucle fermée de manière à réguler la tension intermédiaire de sa cellule de puissance ou dans un deuxième mode de fonctionnement en boucle ouverte sans régulation.

Selon un aspect particulier de l'invention, le deuxième mode de fonctionnement est utilisé en régime établi, si le rendement dans ce mode est le plus élevé. Dans ce deuxième mode de fonctionnement, l'étage d'entrée continue de réguler la tension de sortie et les convertisseurs DC/DC commandés dans le deuxième mode de fonctionnement fonctionnent alors sans régulation (en boucle ouverte).

Selon une particularité, le convertisseur DC/DC de chaque cellule de puissance Ci présente une topologie à double pont, comprenant deux ponts de commutation isolés entre eux par un transformateur, le premier mode de fonctionnement correspondant à un mode double pont dans lequel les deux ponts de commutation sont actifs en régulant ladite tension intermédiaire de la cellule et le deuxième mode de fonctionnement correspondant à un mode simple pont dans lequel l'un des pont de commutation est commandé en pont de diodes et l'autre pont de commutation est actif.

Selon une autre particularité, ladite tension de sortie est régulée par un bloc de régulation de tension recevant en entrée une valeur mesurée de la tension de sortie et ladite valeur de référence, le contrôle du courant d'entrée étant réalisé par un bloc de régulation de courant à partir d'une valeur mesurée du courant d'entrée et d'une valeur de référence.

Selon une autre particularité, la tension intermédiaire de chaque cellule de puissance est régulée dans un bloc de régulation recevant en entrée une valeur de référence de la tension intermédiaire déterminée à partir d'une valeur mesurée de la tension de sortie et une valeur mesurée de la tension intermédiaire.

### Brève description des figures

D'autres caractéristiques et avantages vont apparaître dans la description détaillée qui suit faite en regard des dessins annexés dans lesquels :
- La figure 1 représente de manière schématique l'architecture d'un convertisseur de type AC/DC sur lequel est appliqué le procédé de commande de l'invention ;
- La figure 2 représente, selon un mode réalisation particulier, l'architecture d'une cellule de puissance pouvant être employée dans le convertisseur de la figure 1 ;
- Les figures 3A à 3C illustrent les trois modes de fonctionnement possibles d'un convertisseur ayant l'architecture de la figure 1 et incluant des cellules de puissance dotées d'une architecture représentée sur la figure 2 ;
- La figure 4 représente un premier diagramme illustrant différentes étapes de fonctionnement du procédé de commande de l'invention ;
- La figure 5 représente un deuxième diagramme illustrant différentes étapes de fonctionnement du procédé de commande de l'invention ;

### Description détaillée d'au moins un mode de réalisation

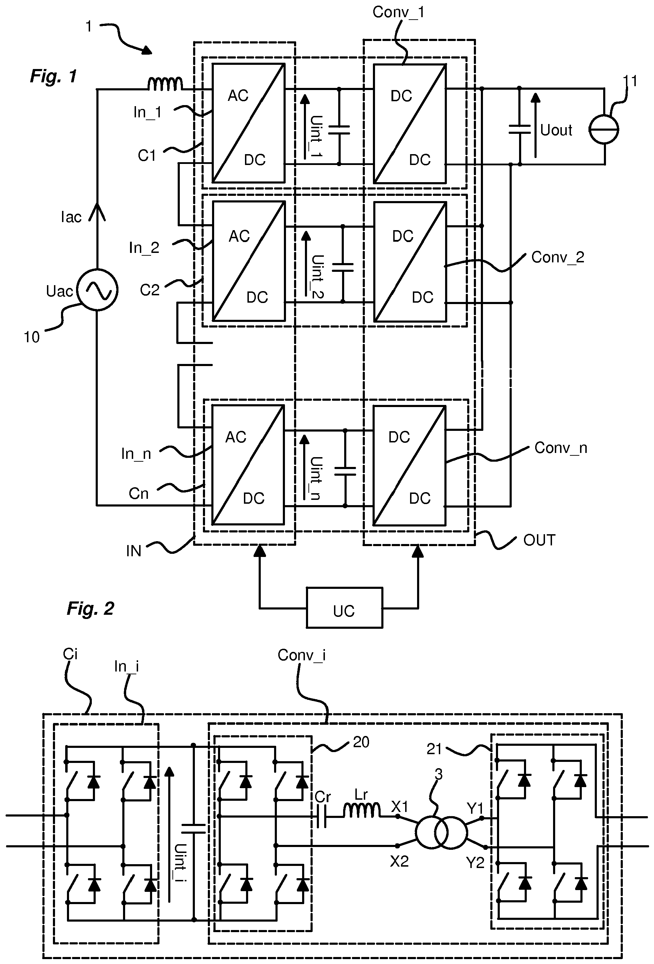

L'invention concerne notamment un procédé de commande d'un convertisseur 1 de type AC/DC ayant une architecture telle que celle représentée sur la figure 1.

Un tel convertisseur 1 comporte n cellules de puissance Ci, avantageusement toutes identiques, avec i allant de 1 à n et n supérieur ou égal à 2.

Chaque cellule de puissance Ci comporte :
- Un convertisseur d'entrée In_i de type AC/DC à au moins deux niveaux de tension ;
- Un convertisseur DC/DC isolé Conv_i connecté audit convertisseur intermédiaire Int_i.

Chaque convertisseur d'entrée In_i d'une cellule Ci est connecté en série avec le convertisseur d'entrée In_i+1 de la cellule Ci+1 pour former un étage d'entrée IN destiné à être connecté à une source 10 de tension alternative fournissant un courant d'entrée lac.

Chaque convertisseur DC/DC Conv_i de la cellule Ci est connecté en parallèle du convertisseur DC/DC Conv_i+1 de la cellule Ci+1 pour former un étage de sortie OUT destiné à fournir une tension de sortie Uout continue à une charge électrique 11.

On a ainsi une structure dite à entrées en série et sorties en parallèle. La tension d'entrée Uac fournie par une source 10 de tension alternative est appliquée sur l'étage d'entrée IN en totalité, c'est-à-dire sur tous les convertisseurs d'entrée In_i en série.

Selon un aspect de l'invention, en référence à la figure 2, dans chaque cellule Ci, le convertisseur d'entrée In_i de type AC/DC est avantageusement un convertisseur à deux niveaux. Il comporte deux bras de commutation comprenant chacun au moins deux transistors de puissance par bras de commutation. Les deux bras de commutation sont avantageusement identiques. Les convertisseurs d'entrée étant reliés en série, l'architecture est la suivante :
- Le point milieu du premier bras de commutation du convertisseur d'entrée de la cellule C1 est destiné à être relié à une première borne de la source d'alimentation.
- Le point milieu du deuxième bras de commutation du convertisseur d'entrée de la cellule C1 est relié au point milieu du premier bras de commutation du convertisseur d'entrée de la cellule C2.
- Pour chaque cellule Ci, avec i supérieur ou égal à 2 et inférieur à n, le point milieu premier bras de commutation de son convertisseur d'entrée est relié au point milieu du deuxième bras de commutation du convertisseur d'entrée de la cellule Ci-1 et le point milieu du deuxième bras de commutation de son convertisseur d'entrée est relié au point milieu du premier bras de commutation du convertisseur d'entrée de la cellule Ci+1.
- Pour la cellule Cn, le point milieu du premier bras de commutation de son convertisseur d'entrée est relié au point milieu du deuxième bras de commutation du convertisseur d'entrée de la cellule Cn-1 et le point milieu du deuxième bras de commutation de son convertisseur d'entrée est relié à une deuxième borne de la source d'alimentation 10.

Selon un aspect de l'invention, le convertisseur DC/DC Conv_i de chaque cellule de puissance Ci a par exemple une structure telle que celle représentée sur la figure 2. Il s'agit avantageusement d'un convertisseur DC/DC en topologie à double pont et isolé qui comporte les éléments suivants :
- Un transformateur 3 comprenant deux premières bornes X1, Y1, entre lesquelles est connecté un enroulement primaire, et deux deuxièmes bornes X2, Y2, entre lesquelles est connecté un enroulement secondaire.
- De manière optionnelle, un circuit résonant sur le lien dit AC situé entre le premier convertisseur et le premier enroulement et qui comporte un condensateur de résonance Cr en série avec une inductance Lr.
- Un premier pont de commutation 20 de type DC/AC connecté à l'enroulement primaire du transformateur. Il comporte deux lignes d'alimentation entre lesquelles est appliquée une tension continue et deux bras de commutation connectés entre les deux lignes d'alimentation et destinés à convertir la tension continue fournie en une tension alternative ou inversement. Chaque bras de commutation comporte au moins deux interrupteurs et un point milieu de connexion situé entre ses deux interrupteurs. Le premier point milieu de connexion est connecté à la borne X1 de l'enroulement primaire P du transformateur et le deuxième point milieu de connexion est connecté à la borne Y1 de l'enroulement primaire du transformateur.
- Un deuxième pont de commutation 21 de type AC/DC connecté à l'enroulement secondaire du transformateur. Il comporte deux lignes d'alimentation entre lesquelles est appliquée une tension continue et deux bras de commutation connectés entre les deux lignes d'alimentation et destinés à convertir une tension alternative en une tension continue ou inversement. Chaque bras de commutation comporte au moins deux interrupteurs et un point milieu de connexion situé entre ses deux interrupteurs. Le premier point milieu de connexion est connecté à la borne X2 de l'enroulement secondaire du transformateur et le deuxième point milieu de connexion est connecté à la borne Y2 de l'enroulement secondaire du transformateur.

Les interrupteurs peuvent être des transistors de tous types, par exemple des transistors unidirectionnels en tension et bidirectionnels en courant de type IGBT ou du type à effet de champ (FET). Dans ce dernier cas, il s'agira par exemple plus particulièrement de transistors de type MOSFET ou JFET. Il pourra par exemple s'agir de transistors MOSFET en carbure de silicium. Compte tenu des transistors employés, le convertisseur DC/DC à topologie double pont fonctionne de manière bidirectionnelle.

Selon la commande appliquée, le transfert de puissance pourra être réalisé de la source vers la charge ou de la charge vers la source.

L'objectif du convertisseur 1 de type AC/DC décrit ci-dessus est de réguler la tension de sortie Uout en respectant un certain nombre de contraintes :
- Assurer une réversibilité en courant ;
- Assurer un facteur de puissance unitaire vu de la source d'alimentation ;
- Contrôler les harmoniques renvoyées vers la source 10 ;
- Contrôler l'oscillation qui est à deux fois la fréquence réseau sur les tensions continues
- Minimiser des pertes dans l'ensemble du convertisseur ;

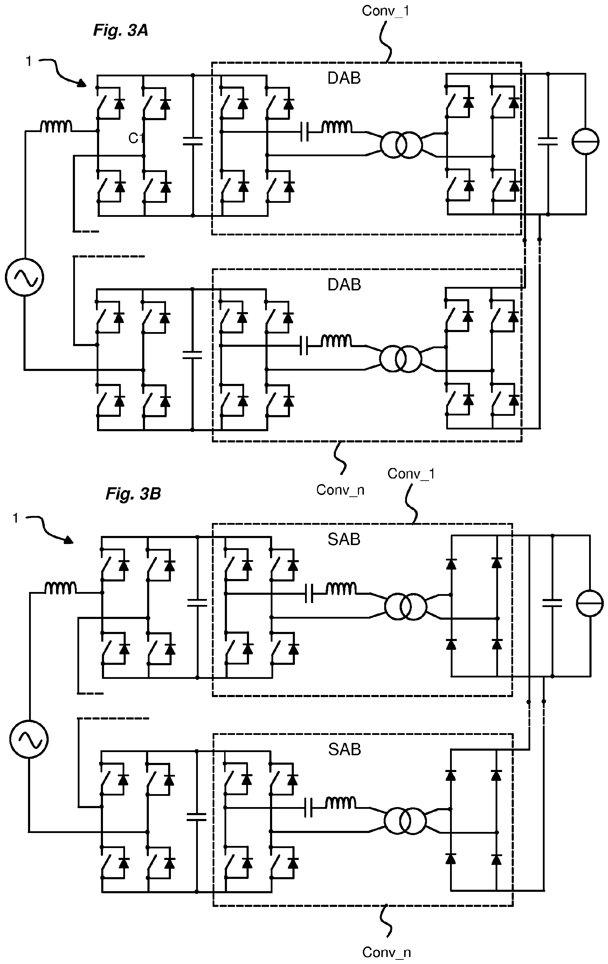

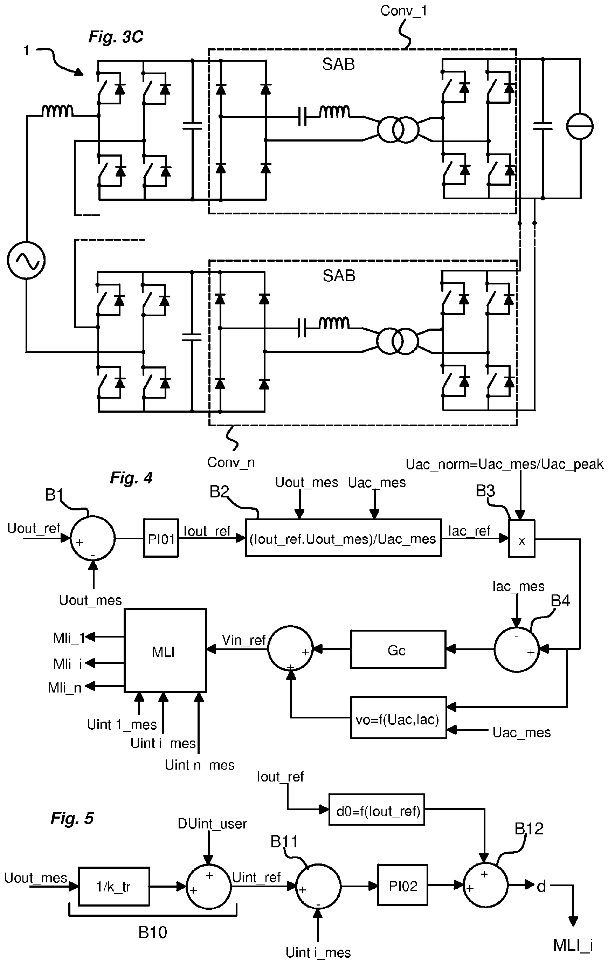

Pour respecter toutes ces contraintes, il est intéressant d'utiliser le convertisseur 1 AC/DC dans sa pleine mesure, c'est-à-dire dans les différentes configurations suivantes :
- Une première configuration consiste à commander en boucle fermée les convertisseurs DC/DC Conv_i de chaque cellule de puissance Ci en mode "double pont" (figure 3A), dit ci-après "mode DAB" ;
- Une deuxième configuration consiste à commander les convertisseurs DC/DC Conv_i de chaque cellule de puissance en mode "simple pont" en boucle ouverte, dit ci-après mode SAB, l'un des deux ponts de commutation (20, 21) étant en mode actif et l'autre en mode passif (c'est-à-dire en mode pont de diodes - figure 3B ou 3C selon le sens de transfert de puissance) ; Il faut noter que dans cette configuration choisie, tous les convertisseurs DC/DC Conv_i du convertisseur 1 doivent être dans la même situation de commande, c'est-à-dire en mode SAB pour l'ensemble d'entre eux.

Pour assurer ces différents modes de contrôle, le procédé de commande de l'invention vise notamment à décorréler la commande de l'étage d'entrée IN de la commande de l'étage de sortie OUT. De cette manière, la commande de l'étage d'entrée IN reste toujours identique quel que soit le mode de fonctionnement choisi pour les convertisseurs DC/DC Conv_i de l'étage de sortie OUT, en mode DAB ou en mode SAB. Il est ainsi possible de changer le mode de fonctionnement (DAB ou SAB) de l'étage de sortie, sans modifier le fonctionnement de l'étage d'entrée et en conservant ainsi le contrôle de la tension de sortie.

L'étage d'entrée, seul organe de régulation, est utilisé pour contrôler la somme des tensions intermédiaires ou bien directement la tension de sortie.

Pour rappel, le mode DAB est notamment utilisé pour :
- L'inversion du flux de puissance. Cette transition fait partie intégrante du mode DAB car le contrôle de la tension intermédiaire est indépendant du signe du courant, la régulation réagissant à la variation de la tension ;
- Garantir l'équilibre de puissance entre les différents étages ;
- La gestion du meilleur compromis entre les pertes convertisseur en mode DAB et de l'étage d'entrée IN en jouant sur le niveau moyen des tensions intermédiaires : maximisation du rendement ;
- Eventuellement ajouter des harmoniques sur les tensions intermédiaires : contrôles des oscillations à deux fois la fréquence réseau, minimisation des harmoniques renvoyées...

Le mode SAB est utilisé en régime établi, si le rendement dans ce mode est le plus élevé. Il ne demande aucun contrôle particulier (fonctionnement en boucle ouverte). Le module de commande doit simplement choisir le pont de commutation à faire fonctionner selon le sens de la puissance.

De manière générale, l'invention vise à proposer un procédé de commande d'un convertisseur 1 de type AC/DC dans lequel :
- L'étage d'entrée IN est commandé pour réguler la tension de sortie Uout à une valeur de référence Uout_ref en contrôlant ledit courant d'entrée Iac,
- Chaque convertisseur DC/DC Conv_i est commandé dans le mode de fonctionnement DAB en boucle fermée de manière à réguler la tension intermédiaire Uint_i de sa cellule de puissance ou dans un deuxième mode de fonctionnement SAB.

Il faut comprendre que différents algorithmes de commande peuvent être mis en oeuvre pour permettre à la fois le contrôle de l'étage d'entrée IN et la commande de chaque convertisseur DC/DC des cellules de puissance et ainsi mettre en oeuvre le procédé de commande de l'invention.

A titre d'exemple et de manière non limitative, la figure 4 représente ainsi le contrôle appliqué à l'étage d'entrée IN et la figure 5 représente le contrôle appliqué à chaque convertisseur DC/DC Conv_i d'une cellule de puissance Ci lorsque celui-ci est en mode DAB, le mode SAB ne nécessitant aucun contrôle particulier. Dans le mode SAB, l'étage d'entrée IN continue de réguler la tension de sortie et les convertisseurs DC/DC commandés dans ce deuxième mode de fonctionnement fonctionnent alors sans régulation (en boucle ouverte). Le système de commande sélectionne simplement le pont de commutation à rendre actif selon le sens de la puissance.

Le procédé de commande est mis en oeuvre par un système de commande qui comporte des moyens de traitement UC, des moyens de mémorisation et des modules logiciels destinés à être exécutés par les moyens de traitement UC. Le système de commande comporte également des moyens d'acquisition de valeurs de tension et de courant en différents point du convertisseur AC/DC. Ces moyens d'acquisition comportent avantageusement des moyens de mesure des valeurs de tension et de courant, tels que des capteurs de tension et des capteurs de courant. Le système comporte également des moyens d'acquisition de valeurs de référence destinées à commander un mode de fonctionnement particulier du convertisseur AC/DC.

Selon un aspect particulier de l'invention, le système de commande sera inclus dans le convertisseur AC/DC.

L'étage d'entrée IN est ainsi commandé par les moyens de traitement UC de manière à réguler la tension de sortie Uout générée par le convertisseur en contrôlant le courant d'entrée I_{AC}. Pour cela, de manière non limitative et selon un mode de réalisation particulier représenté sur la figure 4, le principe de contrôle de l'étage d'entrée IN mis en oeuvre par les moyens de traitement UC est par exemple le suivant :
- Un bloc B1 de régulation de tension reçoit en entrée une valeur de référence Uout_ref pour la tension de sortie et une valeur mesurée Uout_mes de la tension de sortie.
- L'écart déterminé entre les deux valeurs par le bloc de régulation B1 est injecté dans un régulateur à action proportionnelle intégrale (PI1) de manière à en déduire une valeur de référence Iout_ref correspondante pour le courant de sortie.
- La valeur de référence Iout_ref du courant de sortie obtenue est introduite dans un bloc de calcul B2 qui reçoit également en entrée la valeur mesurée Uout_mes de la tension de sortie et la valeur mesurée Uac_mes de la tension appliquée en entrée par la source d'alimentation. Ce bloc de calcul B2 permet ainsi de déterminer une valeur de référence Iac_ref pour le courant d'entrée.
- Un bloc de calcul B3 permet d'appliquer le facteur de puissance à la valeur de référence Iac_ref du courant d'entrée de manière à mettre le courant d'entrée Iac en phase avec la tension d'entrée Uac. Ce facteur de puissance est issu du rapport entre la valeur mesurée Uac_mes de tension d'entrée et la valeur maximale Uac_peak de la tension d'entrée.
- La valeur de référence Iac_ref de courant d'entrée est injectée dans un bloc B4 de régulation de courant recevant en entrée également la valeur mesurée Iac_mes du courant d'entrée. En sortie, on obtient une valeur de référence Vin_ref pour la tension aux bornes de l'étage d'entrée IN. Le bloc B4 de régulation inclut notamment un correcteur Gc, par exemple de type proportionnel, proportionnel-intégral, proportionnel résonnant permettant de réaliser la régulation. Un pré-positionnement est avantageusement appliqué, consistant à calculer la tension en régime permanent.
- La valeur de référence Vin_ref de tension aux bornes de l'étage d'entrée IN est injectée dans un bloc MLI (Modulation à Largeur d'Impulsions) permettant de déterminer les ordres de commande à appliquer aux transistors de chaque convertisseur d'entrée formant l'étage d'entrée du convertisseur AC/DC. Le principe d'une Modulation à Largeur d'Impulsions étant bien connu, il n'est pas décrit dans la présente demande.
- Les ordres de commande déterminés sont ensuite appliqués à chaque convertisseur d'entrée In_i du convertisseur 1.

De manière indépendante et en parallèle, les moyens de traitement UC assurent le contrôle du convertisseur DC/DC isolé Conv_i de chaque cellule de puissance Ci lorsque celui-ci fonctionne en mode DAB. En mode DAB, chaque convertisseur Conv_i est commandé pour contrôler sa tension intermédiaire Uint_i. De manière non limitative et en référence à la figure 5, le principe du contrôle de chaque convertisseur DC/DC Conv_i fonctionnant en mode DAB est par exemple le suivant :
- Un premier bloc B10 de calcul permet de déterminer une valeur de référence Uint_ref pour la tension intermédiaire de la cellule de puissance Ci. Ce bloc de calcul B10 applique le rapport de transformation k_tr à la valeur mesurée Uout_mes de la tension de sortie introduite en entrée du bloc B10 puis ajoute à la valeur obtenue la variation utilisateur DUint_user, correspondant à l'entrée définie par l'utilisateur pour notamment augmenter le rendement global du système et contrôler l'oscillation à deux fois la fréquence réseau déjà évoquée ci-dessus ;
- La valeur de référence Uint_ref de la tension intermédiaire obtenue en sortie du bloc B10 est injectée dans un bloc B11 de régulation recevant également en entrée la valeur mesurée Uint i_mes de la tension intermédiaire de la cellule de puissance Ci.
- La différence est injectée dans un régulateur à action proportionnelle intégrale PI02.
- Un "prépositionnement" est par ailleurs nécessaire. Le convertisseur d'entrée AC/DC, pour réguler la tension de sortie, calcule le courant DC Iout_ref à envoyer dans le condensateur de sortie. Du point de vue des convertisseur DC/DC, on peut donc considérer que chaque convertisseur DC/DC va devoir générer Iout_ref/N en sortie (N étant le nombre de convertisseurs DC/DC), et connaissant les caractéristiques du convertisseur DC/DC, on peut évaluer le déphasage théorique d0 permettant de générer ce courant. La régulation de la tension intermédiaire se contente d'ajouter ou retrancher un terme à ce déphasage théorique d0. Le principal avantage est de pouvoir répondre à un à-coup de courant sans perturber les tensions intermédiaires. La dynamique se trouve augmentée.
- En fonction du courant demandé par l'étage d'entrée IN, un bloc B12 de calcul détermine un déphasage d puis en déduit la modulation MLI_i à appliquer au convertisseur Conv_i de la cellule de puissance. Le convertisseur DC/DC isolé utilisé fonctionne en imposant aux bornes du transformateur deux tensions déphasées. En contrôlant le déphasage d entre les deux tensions, la solution de l'invention permet un contrôle du courant qui traverse le convertisseur en mode DAB et donc de réguler la tension aux bornes du condensateur d'entrée (ou de sortie) du convertisseur.

Les différents blocs décrits ci-dessus seront avantageusement exprimés sous la forme d'instructions logicielles stockées dans les moyens de mémorisation du système et exécutées par les moyens de traitement UC, notamment à partir des valeurs mesurées de tension et de courants obtenues par des capteurs positionnés de manière adaptée. Lesdits capteurs feront avantageusement partie du système de commande de l'invention, et seront connectés sur des entrées des moyens de traitement UC pour faire remonter des données de mesure vers les moyens de traitement en vue du contrôle du convertisseur 1.

On comprend de ce qui précède que la solution de l'invention présente de nombreux avantages, parmi lesquels :
- Un contrôle unique pour l'étage d'entrée IN ;
- Un contrôle de la répartition des pertes étage d'entrée / convertisseur en mode DAB dans le but de maximiser le rendement global du convertisseur ;
- Un équilibrage de la puissance dans les différents niveaux ;
- Une inversion de la puissance « transparente » pour le contrôle ;
- Une adaptation aux variations de tensions de la source 10 ;
- Une possibilité de contrôler les harmoniques des tensions intermédiaires dans le but de minimiser les harmoniques renvoyées et/ou des minimiser la composante à deux fois la fréquence réseau sur la tension de sortie.

Le contrôle de l'étage d'entrée IN est ainsi unique et indépendant du mode de fonctionnement du reste du convertisseur. On peut utiliser les cellules de puissance en mode DAB ou, comme dans le cas classique, en mode SAB toutes les fois où le rendement s'en trouverait maximisé et où le contrôle de la tension intermédiaire n'est pas nécessaire. On peut passer en mode DAB à la demande et ajouter de nombreuses possibilités au convertisseur.

## Revendications

1. Procédé de commande d'un convertisseur (1) AC/DC multiniveaux qui comporte n cellules de puissance Ci, avec i allant de 1 à n et n supérieur ou égal à 2 et dans lequel :
- Chaque cellule de puissance comporte un convertisseur d'entrée (In_i) de type AC/DC à au moins deux niveaux de tension et un convertisseur DC/DC (Conv_i) isolé connecté audit convertisseur d'entrée,
- Chaque convertisseur d'entrée (In_i) d'une cellule Ci étant connecté en série avec le convertisseur d'entrée (In_i+1) de la cellule Ci+1 pour former un étage d'entrée (IN) destiné à être connecté à une source (10) de tension alternative fournissant un courant d'entrée et commandé pour convertir une tension alternative en n tensions continues intermédiaires (Uint_i) réparties dans chaque cellule de puissance,
- Le convertisseur DC/DC (Conv_i) de chaque cellule Ci étant connecté en parallèle du convertisseur DC/DC (Conv-i+1) de la cellule Ci+1 pour former un étage de sortie (OUT) destiné à fournir une tension de sortie (Uout) continue à une charge électrique (11),
- **caractérisé en ce que** :
- L'étage d'entrée (IN) est commandé pour réguler ladite tension de sortie (Uout) à une valeur de référence (Uout_ref) en contrôlant ledit courant d'entrée (lac),
- Chaque convertisseur DC/DC (Conv_i) est commandé dans un premier mode de fonctionnement (DAB) en boucle fermée de manière à réguler la tension intermédiaire (Uint_i) de sa cellule de puissance ou dans un deuxième mode de fonctionnement (SAB) en boucle ouverte sans régulation.

2. Procédé selon la revendication 1, **caractérisé en ce que** le convertisseur DC/DC (Conv_i) de chaque cellule de puissance Ci présente une topologie à double pont, comprenant deux ponts de commutation (20, 21) isolés entre eux par un transformateur, et **en ce que** le premier mode de fonctionnement (DAB) correspond à un mode double pont dans lequel les deux ponts de commutation sont actifs en régulant ladite tension intermédiaire (Int_i) de la cellule et **en ce que** le deuxième mode de fonctionnement (SAB) correspond à un mode simple pont dans lequel l'un des pont de commutation est commandé en pont de diodes et l'autre pont de commutation est actif.

3. Procédé selon la revendication 1 ou 2, **caractérisé en ce que** ladite tension de sortie (Uout) est régulée par un bloc (B1) de régulation de tension recevant en entrée une valeur mesurée (Uout_mes) de la tension de sortie et ladite valeur de référence (Uout_ref), et **en ce que** le contrôle du courant d'entrée (lac) est réalisé par un bloc (B4) de régulation de courant à partir d'une valeur mesurée (Iac_mes) du courant d'entrée et d'une valeur de référence (Iac_ref).

4. Procédé selon la revendication 1 ou 2, **caractérisé en ce que** la tension intermédiaire (Uint_i) de chaque cellule de puissance est régulée dans un bloc de régulation (B11) recevant en entrée une valeur de référence (Uint_ref) de la tension intermédiaire déterminée à partir d'une valeur mesurée (Uout_mes) de la tension de sortie et une valeur mesurée (Uint i_mes) de la tension intermédiaire.

5. Système de commande d'un convertisseur (1) AC/DC multiniveaux qui comporte n cellules de puissance Ci, avec i allant de 1 à n et n supérieur ou égal à 2 et dans lequel :
- Chaque cellule de puissance comporte un convertisseur d'entrée (In_i) de type AC/DC à au moins deux niveaux de tension et un convertisseur DC/DC (Conv_i) isolé connecté audit convertisseur d'entrée,
- Chaque convertisseur d'entrée (In_i) d'une cellule Ci étant connecté en série avec le convertisseur d'entrée (In_i+1) de la cellule Ci+1 pour former un étage d'entrée (IN) destiné à être connecté à une source (10) de tension alternative fournissant un courant d'entrée et commandé pour convertir une tension alternative en n tensions continues intermédiaires (Uint_i) réparties dans chaque cellule de puissance,
- Le convertisseur DC/DC (Conv_i) de chaque cellule Ci étant connecté en parallèle du convertisseur DC/DC (Conv_i+1) de la cellule Ci+1 pour former un étage de sortie (OUT) destiné à fournir une tension de sortie (Uout) continue à une charge électrique (11),
- **Caractérisé en ce qu'**il comporte :
- Un module de commande de l'étage d'entrée (IN) apte à réguler ladite tension de sortie (Uout) à une valeur de référence (Uout_ref) en contrôlant ledit courant d'entrée (lac),
- Un module de commande apte à commander chaque convertisseur DC/DC (Conv_i) dans un premier mode de fonctionnement (DAB) en boucle fermée de manière à réguler la tension intermédiaire (Uint_i) de sa cellule de puissance ou dans un deuxième mode de fonctionnement (SAB) en boucle ouverte sans régulation.

6. Système selon la revendication 5, **caractérisé en ce que** le convertisseur DC/DC (Conv_i) de chaque cellule de puissance Ci présente une topologie à double pont, comprenant deux ponts de commutation (20, 21) isolés entre eux par un transformateur, et **en ce que** le premier mode de fonctionnement (DAB) correspond à un mode double pont dans lequel les deux ponts de commutation sont actifs en régulant ladite tension intermédiaire (Int_i) de la cellule et **en ce que** le deuxième mode de fonctionnement (SAB) correspond à un mode simple pont dans lequel l'un des pont de commutation est commandé en pont de diodes et l'autre pont de commutation est actif.

7. Système selon la revendication 5 ou 6, **caractérisé en ce que** ladite tension de sortie (Uout) est régulée par un bloc (B1) de régulation de tension recevant en entrée une valeur mesurée (Uout_mes) de la tension de sortie et ladite valeur de référence (Uout_ref), et **en ce que** le contrôle du courant d'entrée (lac) est réalisé par un bloc (B4) de régulation de courant à partir d'une valeur mesurée (Iac_mes) du courant d'entrée et d'une valeur de référence (Iac_ref).

8. Système selon la revendication 5 ou 6, **caractérisé en ce que** la tension intermédiaire (Uint_i) de chaque cellule de puissance est régulée dans un bloc de régulation (B11) recevant en entrée une valeur de référence (Uint_ref) de la tension intermédiaire déterminée à partir d'une valeur mesurée (Uout_mes) de la tension de sortie et une valeur mesurée (Uint i_mes) de la tension intermédiaire.

## Patentansprüche

1. Verfahren zum Steuern eines mehrstufigen AC/DC-Wandlers (1), der n Leistungszellen Ci beinhaltet, wobei i von 1 bis n geht und n größer als oder gleich 2 ist und wobei:
- jede Leistungszelle einen Eingangswandler (In_i) vom Typ AC/DC mit zumindest zwei Spannungsniveaus und einen isolierten DC/DC-Wandler (Conv i) beinhaltet, der mit dem Eingangswandler verbunden ist,
- jeder Eingangswandler (In_i) einer Zelle Ci in Reihe mit dem Eingangswandler (In_i+1) der Zelle Ci+1 verbunden ist, um eine Eingangsstufe (IN) zu bilden, die dazu gedacht ist, mit einer Wechselspannungsquelle (10) verbunden zu sein, die einen Eingangsstrom liefert und gesteuert wird, um eine Wechselspannung in n Zwischengleichspannungen (Uint_i) umzuwandeln, die auf jede Leistungszelle verteilt sind,
- der DC/DC-Wandler (Conv i) jeder Zelle Ci parallel mit dem DC/DC-Wandler (Conv_i+1) der Zelle Ci+1 verbunden ist, um eine Ausgangsstufe (OUT) zu bilden, die dazu gedacht ist, eine Ausgangsgleichspannung (Uout) an eine elektrische Ladung (11) zu liefern,
- **dadurch gekennzeichnet, dass**:
- die Eingangsstufe (IN) gesteuert wird, um die Ausgangsspannung (Uout) auf einen Referenzwert (Uout_ref) zu regulieren, indem der Eingangsstrom (Iac) kontrolliert wird,
- jeder DC/DC-Wandler (Conv_i) in einem ersten Funktionsmodus (DAB) im geschlossenen Kreislauf auf eine Weise gesteuert wird, um die Zwischenspannung (Uint_i) seiner Leistungszelle zu regulieren, oder in einem zweiten Funktionsmodus (SAB) im offenen Kreislauf ohne Regulierung.

2. Verfahren nach Anspruch 1, **dadurch gekennzeichnet, dass** der DC/DC-Wandler (Conv i) jeder Leistungszelle Ci eine Doppelbrückentopologie aufweist, die zwei Schaltbrücken (20, 21) umfasst, die durch einen Transformator voneinander isoliert sind, und dass der erste Funktionsmodus (DAB) einem Doppelbrückenmodus entspricht, in dem die zwei Schaltbrücken aktiv sind, indem sie die Zwischenspannung (Int_i) der Zelle regulieren und dass der zweite Funktionsmodus (SAB) einem Einfachbrückenmodus entspricht, in dem eine der Schaltbrücken als Diodenbrücke gesteuert wird und die andere Schaltbrücke aktiv ist.

3. Verfahren nach Anspruch 1 oder 2, **dadurch gekennzeichnet, dass** die Ausgangsspannung (Uout) durch einen Spannungsregulierungsblock (B1) reguliert wird, der am Eingang einen gemessenen Wert (Uout_mes) der Ausgangsspannung und den Referenzwert (Uout_ref) empfängt, und dass die Steuerung des Eingangsstroms (Iac) durch einen Stromregulierungsblock (B4) anhand eines gemessenen Wertes (Iac_mes) des Eingangsstroms und eines Referenzwertes (Iac_ref) umgesetzt wird.

4. Verfahren nach Anspruch 1 oder 2, **dadurch gekennzeichnet, dass** die Zwischenspannung (Uint_i) jeder Leistungszelle in einem Regulierungsblock (B11) reguliert wird, der am Eingang einen Referenzwert (Uint_ref) der Zwischenspannung empfängt, die anhand eines gemessenen Wertes (Uout mes) der Ausgangsspannung und eines gemessenen Wertes (Uint i_mes) der Zwischenspannung bestimmt wird.

5. System zum Steuern eines mehrstufigen AC/DC-Wandlers (1), der n Leistungszellen Ci beinhaltet, wobei i von 1 bis n geht und n größer als oder gleich 2 ist und wobei:
- jede Leistungszelle einen Eingangswandler (In_i) vom Typ AC/DC mit zumindest zwei Spannungsniveaus und einen isolierten DC/DC-Wandler (Conv i) beinhaltet, der mit dem Eingangswandler verbunden ist,
- jeder Eingangswandler (In_i) einer Zelle Ci in Reihe mit dem Eingangswandler (In_i+1) der Zelle Ci+1 verbunden ist, um eine Eingangsstufe (IN) zu bilden, die dazu gedacht ist, mit einer Wechselspannungsquelle (10) verbunden zu sein, die einen Eingangsstrom liefert und gesteuert wird, um eine Wechselspannung in n Zwischengleichspannungen (Uint_i) umzuwandeln, die auf jede Leistungszelle verteilt sind,
- der DC/DC-Wandler (Conv i) jeder Zelle Ci parallel mit dem DC/DC-Wandler (Conv_i+1) der Zelle Ci+1 verbunden ist, um eine Ausgangsstufe (OUT) zu bilden, die dazu gedacht ist, eine Ausgangsgleichspannung (Uout) an eine elektrische Ladung (11) zu liefern,
- **dadurch gekennzeichnet, dass** es Folgendes beinhaltet:
- ein Steuermodul der Eingangsstufe (IN), das geeignet ist, um die Ausgangsspannung (Uout) auf einen Referenzwert (Uout_ref) zu regulieren, indem der Eingangsstrom (Iac) kontrolliert wird,
- ein Steuermodul, das geeignet ist, um jeden DC/DC-Wandler (Conv_i) in einem ersten Funktionsmodus (DAB) im geschlossenem Kreislauf auf eine Weise zu steuern, um die Zwischenspannung (Uint_i) seiner Leistungszelle zu regulieren, oder in einem zweiten Funktionsmodus (SAB) im offenen Kreislauf ohne Regulierung.

6. System nach Anspruch 5, **dadurch gekennzeichnet, dass** der DC/DC-Wandler (Conv i) jeder Leistungszelle Ci eine Doppelbrückentopologie aufweist, die zwei Schaltbrücken (20, 21) umfasst, die durch einen Transformator voneinander isoliert sind, und dass der erste Funktionsmodus (DAB) einem Doppelbrückenmodus entspricht, in dem die zwei Schaltbrücken aktiv sind, indem sie die Zwischenspannung (Int_i) der Zelle regulieren und dass der zweite Funktionsmodus (SAB) einem Einfachbrückenmodus entspricht, in dem eine der Schaltbrücken als Diodenbrücke gesteuert wird und die andere Schaltbrücke aktiv ist.

7. System nach Anspruch 5 oder 6, **dadurch gekennzeichnet, dass** die Ausgangsspannung (Uout) durch einen Spannungsregulierungsblock (B1) reguliert wird, der am Eingang einen gemessenen Wert (Uout_mes) der Ausgangsspannung und den Referenzwert (Uout_ref) empfängt, und dass die Steuerung des Eingangsstroms (Iac) durch einen Stromregulierungsblock (B4) anhand eines gemessenen Wertes (Iac_mes) des Eingangsstroms und eines Referenzwertes (Iac_ref) umgesetzt wird.

8. System nach Anspruch 5 oder 6, **dadurch gekennzeichnet, dass** die Zwischenspannung (Uint_i) jeder Leistungszelle in einem Regulierungsblock (B11) reguliert wird, der am Eingang einen Referenzwert (Uint_ref) der Zwischenspannung empfängt, die anhand eines gemessenen Wertes (Uout mes) der Ausgangsspannung und eines gemessenen Wertes (Uint i_mes) der Zwischenspannung bestimmt wird.

## Claims

1. Method for controlling a multi-level AC/DC converter (1) which comprises n power cells Ci, where i goes from 1 to n and n is greater than or equal to 2, and wherein:
- each power cell comprises an input converter (In_i) of the AC/DC type with at least two voltage levels and an insulated DC/DC converter (Conv i) connected to said input converter,
- each input converter (In_i) of a cell Ci being connected in series to the input converter (In_i+1) of the cell Ci + 1 so as to form an input stage (IN) intended to be connected to a source (10) of alternating voltage supplying an input current and controlled to convert an alternating voltage to n intermediate direct voltages (Uint_i) distributed in each power cell,
- the DC/DC converter (Conv i) of each cell Ci being connected in parallel to the DC/DC converter (Conv_i+1) of the cell Ci+1 so as to form an output stage (OUT) intended to supply a direct output voltage (Uout) to an electrical load (11),
- **characterised in that**:
- the input stage (IN) is controlled to regulate said output voltage (Uout) to a reference value (Uout_ref) by controlling said input current (lac),
- each DC/DC converter (Conv i) is controlled in a first operating mode (DAB) in a closed loop so as to regulate the intermediate voltage (Uint_i) of its power cell or in a second operating mode (SAB) in an open loop without regulation.

2. Method according to Claim 1, **characterised in that** the DC/DC converter (Conv i) of each power cell Ci has a dual bridge topology, comprising two switching bridges (20, 21) insulated from each other by a transformer, and **in that** the first operating mode (DAB) corresponds to a dual active bridge mode wherein the two switching bridges are active while regulating said intermediate voltage (Int_i) of the cell and **in that** the second operating mode (SAB) corresponds to a single active bridge mode wherein one of the switching bridges is controlled as a diode bridge and the other switching bridge is active.

3. Method according to Claim 1 or 2, **characterised in that** said output voltage (Uout) is regulated by a voltage regulation block (B1) receiving as an input a measured value (Uout_mes) of the output voltage and said reference value (Uout_ref), and **in that** the input current (lac) is controlled by a current regulation block (B4) on the basis of a measured value (Iac_mes) of the input current and a reference value (Iac_ref).

4. Method according to Claim 1 or 2, **characterised in that** the intermediate voltage (Uint_i) of each power cell is regulated in a regulation block (B11) receiving as an input a reference value (Uint _ref) of the intermediate voltage determined on the basis of a measured value (Uout_mes) of the output voltage and a measured value (Uint i_mes) of the intermediate voltage.

5. System for controlling a multi-level AC/DC converter (1) which comprises n power cells Ci, where i goes from 1 to n and n is greater than or equal to 2, and wherein:
- each power cell comprises an input converter (In_i) of the AC/DC type with at least two voltage levels and an insulated DC/DC converter (Conv i) connected to said input converter,
- each input converter (In_i) of a cell Ci being connected in series to the input converter (In_i+1) of the cell Ci + 1 so as to form an input stage (IN) intended to be connected to a source (10) of alternating voltage supplying an input current and controlled to convert an alternating voltage to n intermediate direct voltages (Uint_i) distributed in each power cell,
- the DC/DC converter (Conv i) of each cell Ci being connected in parallel to the DC/DC converter (Conv_i+1) of the cell Ci+1 so as to form an output stage (OUT) intended to supply a direct output voltage (Uout) to an electrical load (11),
- **characterised in that** it comprises:
- a module for controlling the input stage (IN) able to regulate said output voltage (Uout) to a reference value (Uout _ref) by controlling said input current (lac),
- a control module able to control each DC/DC converter (Conv i) in a first operating mode (DAB) in a closed loop so as to regulate the intermediate voltage (Uint_i) of its power cell or in a second operating mode (SAB) in an open loop without regulation.

6. System according to Claim 5, **characterised in that** the DC/DC converter (Conv i) of each power cell Ci has a dual bridge topology, comprising two switching bridges (20, 21) insulated from each other by a transformer, and **in that** the first operating mode (DAB) corresponds to a dual active bridge mode wherein the two switching bridges are active while regulating said intermediate voltage (Int_i) of the cell and **in that** the second operating mode (SAB) corresponds to a single active bridge mode wherein one of the switching bridges is controlled as a diode bridge and the other switching bridge is active.

7. System according to Claim 5 or 6, **characterised in that** said output voltage (Uout) is regulated by a voltage regulation block (B1) receiving as an input a measured value (Uout_mes) of the output voltage and said reference value (Uout_ref), and **in that** the input current (lac) is controlled by a current regulation block (B4) on the basis of a measured value (Iac_mes) of the input current and a reference value (Iac_ref).

8. System according to Claim 5 or 6, **characterised in that** the intermediate voltage (Uint_i) of each power cell is regulated in a regulation block (B11) receiving as an input a reference value (Uint _ref) of the intermediate voltage determined on the basis of a measured value (Uout mes) of the output voltage and a measured value (Uint i_mes) of the intermediate voltage.
